# EUROPEAN PATENT SPECIFICATION

(11) **EP 2 804 483 B1**
(45) Date of publication and mention of the grant of the patent: **25.05.2016**
(21) Application number: 13707049.6
(22) Date of filing: 17.01.2013
(51) Int. Cl.: A21C 15/02, A23G 3/20, A21D 13/00

(54) **METHOD FOR WELDING WAFERS AND EQUIPMENT THEREFOR**
VERFAHREN ZUM SCHWEISSEN VON WAFFELN UND AUSRÜSTUNG DAFÜR
PROCÉDÉ POUR SOUDER DES GAUFRETTES ET ÉQUIPEMENT POUR CELA

(30) Priority: 19.01.2012 IT TO20120034
(43) Date of publication of application: 26.11.2014
(73) Proprietor: Soremartec S.A., 2632 Findel (LU); Ferrero S.p.A., 12051 Alba (Cuneo) (IT)
(72) Inventor: FEDERICI, Fabio, I-12051 Alba (Cuneo) (IT); MASSA, Luciano, I-12042 Bra (Cuneo) (IT)
(74) Representative: Rambelli, Paolo
(86) International application number: PCT/IB2013/050433
(87) International publication number: WO 2013/108206

(56) References cited:
- EP-A1- 0 614 614
- EP-A1- 1 647 190
- EP-A2- 0 086 319
- FR-A1- 2 643 228
- US-A- 3 685 744
- US-A- 4 759 706
- US-A- 5 063 068

## Description

The present invention relates to a method for welding together, along mutual joining surfaces, a pair of wafers produced by baking a wafer batter.

The invention also relates to equipment for the application of the welding method.

The invention was developed with particular regard to the production of sweet or savoury pastry or snack products, each comprising two half-shells of wafer, joined together at their mutually facing mouth parts, so as to form a hollow body, optionally including a body of filling within itself.

For a general description of products of this type and the production methods for them, reference may be made, for example, to European patents EP-B-0 083 324, EP-B-0 086 319 and EP-B-0 614 614.

In the methods described in these documents, an edible adhesive material having thermoplastic properties, such as chocolate, is used to join the wafer half-shells together.

EP-A-1 647 190 describes a method for producing hollow bodies of the aforesaid type, in which the welding between the wafers is carried out with the use of a moistening liquid, particularly water, which has no adhesive or cementing properties.

The method described therein includes the application of the moistening liquid by spraying onto the wafers which are housed in a compartmented support, with the optional application of a mask leaving only the annular surfaces of the mouth of the wafer exposed, these surfaces being used for the subsequent joining.

The method is advantageous in that it enables a heat-resistant weld to be obtained without the addition of edible cementing substances which may alter the organoleptic characteristics of the product.

However, it has been found that the general wetting of the adhesion surfaces by spraying, with the formation of a liquid film on these surfaces, may give rise to defects both in the appearance of the product and in the adhesive properties after the parts have been joined and made to adhere by contact.

Although the parts are joined by contact, either without any application of pressure or with the contact pressure reduced to a minimum, the general wetting of the contact surfaces gives rise to the formation of a thin layer in which the porous structure of the wafer includes collapsed cells, such that the end product resulting from the joining of the wafers has a structure resembling the rings of Saturn in its equatorial region, which, following the evaporation and drying of the moistening liquid, has a greater density than that of the adjacent wafer regions, and is also unappealing in terms of appearance. Furthermore, the wetting of the wafers can lead to the onset of microbiological deterioration.

US 3 685 744 A describes an apparatus for the production of pies in which a top crust is to be crimped to the edge of a bottom crust; unbaked pie shells are conveyed past an applicator station when an application deposits an atomized spray of water on the upwardly facing annular surface of the bottom crust of a pie shell as it is conveyed past the station. The applicator is designed to produce an annular spray pattern that closely matches the annular surface on the crust.

One object of the present invention is to provide an improved method which overcomes the aforesaid drawbacks, thus making it possible to obtain a hollow body of wafer in which the welding region between the wafers is not substantially visible, while providing improved welding in terms of adhesion.

Another object of the invention is to provide a method which limits the contact of the wafer with water, thus preventing microbiological deterioration.

In view of these objects, the invention proposes a method having the characteristics defined in the claims below, together with equipment for the application of the method.

Further characteristics and advantages of the method and equipment according to the invention will be made clear by the following detailed description, which refers to the attached drawings provided by way of non-limiting example, in which:
- Figure 1 is a perspective view of a typical wafer to which the method according to the invention is applied;
- Figures 2 to 5 provide a schematic representation of the consecutive steps of operation of the method according to the invention; and
- Figure 6 is a schematic representation of the injection head for the jet deposition of the moistening liquid.

The main characteristic of the method according to the invention is that the aqueous moistening liquid is applied to at least one of the contact surfaces, and optionally to both of these surfaces, in the form of droplets (or preferably microdrops) which are discrete, that is to say separate and spaced apart from one another along the whole perimetric profile of these surfaces.

The moistening liquid used is preferably water, in particular demineralized water; however, it may be feasible to use aqueous solutions containing small amounts, for example up to 5%, of a solute such as sugar, salt, dextrin, maltodextrin or edible surfactants, provided that the content of solute is not such as to form a solution having adhesive or cementing properties which would make the jet deposition described below unusable.

The wafers to be welded are generally in the shape of half-shells, with an annular mouth surface which is generally flat. These wafers are produced by using conventional batter recipes comprising a mixture of flour or flours in water, usually with the addition of ingredients such as milk, emulsifiers such as lecithin, raising agents and food fats.

A recipe typical of these batters is given in EP-A-1 647 190 and comprises the following ingredients:
- water: 40-60% by weight
- flour: 30-45% by weight
- sugars: 0.5-2% by weight
- cocoa solids: 1-2% by weight
- food fats: 1.5-2.5% by weight
- low-fat milk: 0.5-1.5% by weight
and further ingredients chosen from among sodium bicarbonate, salt, ammonium carbonate, and soya lecithin, each of which is used, for example, in concentrations not exceeding 0.5% by weight.

The method according to the invention is applied to wafers which have previously been baked in heated moulds. With regard to the morphological characteristics of the surfaces to be joined, it is preferable, within the scope of the invention, to use wafers or half-shells having what is known as a "finished edge" on their annular mouth surfaces, in other words an edge having a high degree of surface finish with a surface substantially free of macropores, that is to say a smooth surface with the appearance of a superficial skin, resulting from the baking of the batter in contact with the surfaces of the baking half-moulds.

Half-shells having these characteristics may be produced, for example, using the method described in US 2004/137123 or WO2011/067733.

However, the method according to the invention can be applied to open-cell porous surfaces or to surfaces with a crumbled structure in which the porous inner structure of the wafer is exposed to the outside. Structures of this type are, for example, present when the half-shells are separated by an interconnecting wafer web, using the horizontal cutting method described in EP-A-0 054 229 or EP-A-0 221 033.

The smooth adhesion surface (with a finished edge) is considered preferable in combination with the use of a batter containing small amounts of food fats, in the aforesaid fields for example; the presence of food fats results in a slightly hydrophobic surface in which the microdrops of the moistening liquid retain the typical meniscus shape for a certain period at least, and generally, in the industrial process, up to the point at which these surfaces are made to adhere to each other by mutual contact, thus preventing the diffusion of the moistening liquid inside the wafer structure.

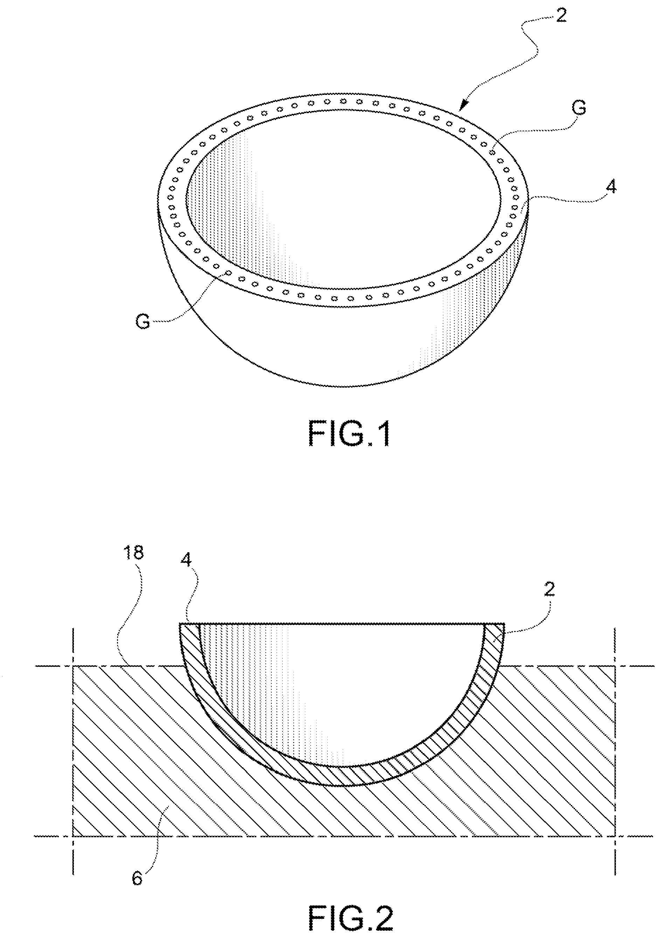

A typical wafer structure, indicated as a whole by 2 and having a circular annular surface 4, preferably with a finished edge, is shown in Fig. 1; it is to be understood that the shape can vary considerably from what is shown.

In the method according to the invention, the steps of which are shown in Figs. 2 to 5, the wafers 2 are positioned in a compartmented support 6, in other words one having a plurality of concave seats for housing the wafers, designed in such a way that the annular mouth surface 4 projects slightly above the plane of the support 18 in which the mouth profiles of the housing seats lie.

The equipment for the application of the method comprises droplet deposition means comprising, preferably, at least one jet injection head 8 for injection of the moistening liquid, at least one support 6, preferably compartmented, for housing the wafers, and movement means adapted to create a relative motion between the injection head and the support along the annular profile of the surface of the mouth 4 of the wafers, thus enabling the moistening liquid to be deposited in droplets G along that profile.

According to the currently preferred technical solution, the compartmented support is fixed and motor means are provided for moving the deposition means, in other words the injection head or plurality of injection heads.

The injection head 8 is preferably a jet injection head, of the type used in ink jet printers, designed to create pulsed jets (known as a "drop-on-demand").

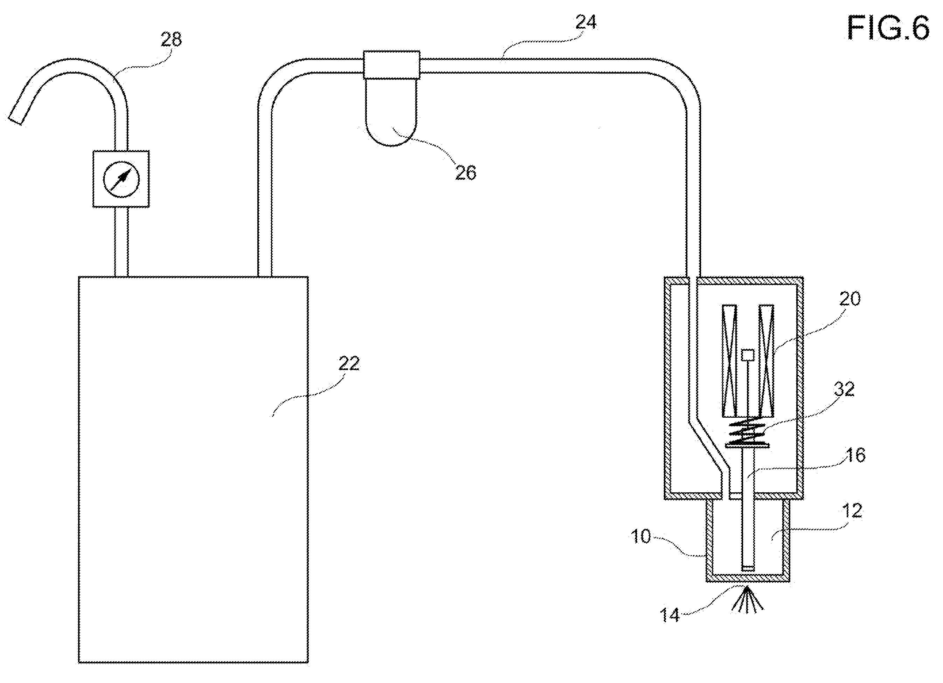

A diagram of the head, in a currently preferred embodiment, is shown in Fig. 6.

The injection head comprises a casing 10, forming a chamber 12 adapted to receive the moistening liquid and keep it under pressure, and provided with a nozzle 14 for the jet dispensing of the liquid. The nozzle 14 is associated with a shutter with a stem 16, movable vertically between a closed position and an open position of the opening of the nozzle 14.

Pulsed dispensing is obtained by using electromagnetic solenoid means 20 interacting with the shutter, these means, when energized, causing the translation of the shutter between the closed position and the open position of the nozzle against the action of resilient means 32 tending to keep the shutter in the closed position. It is to be understood that a dual solution, in which the electromagnetic means cause the translation of the shutters to the closed position, is also feasible.

The moistening liquid is contained in a reservoir 22 and is fed from this to the chamber 12 of the injection head via a conduit 24 in which a filter 26 is interposed. The liquid is kept under pressure in the reservoir 22 by supplying pressurized air to the reservoir via a conduit 28.

Typically, the moistening liquid (particularly demineralized water) is kept under a pressure of 0.3 to 1 bar; the diameter of the spray nozzle is preferably of the order of 50 to 90 µm (for example, 60 µm).

In order to obtain optimal deposition of the moistening liquid on the adhesion surface of the wafer, it is preferable to keep the feed nozzle at a minimal distance from this surface; for example, distances of the order of 2 to 3 mm have been found to be optimal.

In any case, the injection pressure to which the moistening liquid is subjected and the distance of the nozzle from the surface of the wafer are preferably chosen so as to provide deposition which is only superficial, without any penetration of moisture into the inner structure of the wafer.

In Figures 1, 3 and 4, the letter G indicates the droplets deposited as a jet along the whole profile of the annular surface 4 of the wafer 2; the droplets are preferably equidistant from one another and are deposited, preferably, in the central region of the annular surface.

With reference to a typical wafer product, of the type shown in Fig. 1, the total quantity of water fed as a jet does not exceed a proportion of about 1-2% relative to the total weight of the wafer on which the deposition is carried out.

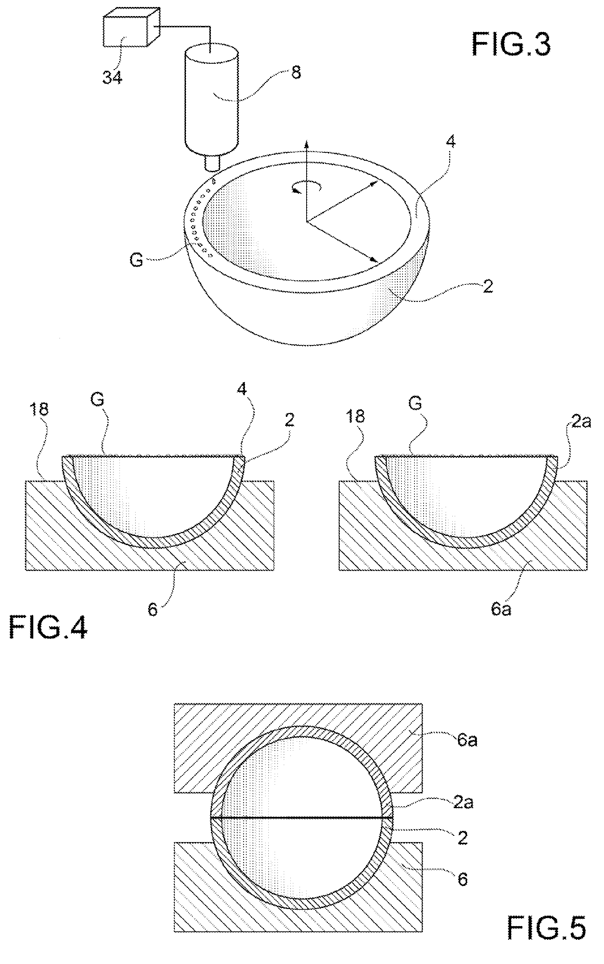

After the deposition of the moistening liquid in droplets, which as mentioned above may be applied to a single wafer or to the pair of wafers 2 and 2a to be joined, the wafers are welded by folding a pair of supports 6 and 6a, in which the moistened wafers (2, 2a) are housed, in a book-like manner (Figure 5). The joining is carried out by bringing the annular edge surfaces into contact with one another, with the application of a small amount of pressure, for a period of several minutes, between the two contact surfaces, care being taken to avoid cracking the wafers.

The method is particularly intended for the production of hollow bodies including a filling, and in particular a substantially dry body of filling, or in any case one with a moisture content generally not exceeding 2% by weight, which is not liable to damage the wafer structure.

The body of filling may be introduced into the wafers before the jet deposition of the moistening liquid, or optionally after its deposition and before joining, although this solution is less preferable.

The final step of the production method may comprise a final drying stage, in which the joined supports, containing the wafers welded to one another, may be made to travel to an evaporation station, in order to remove the added moisture; however, because of the very small amount of moistening liquid deposited in the method according to the invention, it is possible to omit any final drying step.

Thus the method according to the invention can be used to produce hollow bodies of wafer, formed by the joining and welding of wafers to one another, without the addition of added cementing materials, while also substantially reducing the exposure of the wafers to the water, which, by being deposited in the form of discrete drops, affects the adhesion surface only, and cannot penetrate into the depth of the wafer structure.

This also makes it possible to avoid any deterioration of the wafer structure, not only in terms of deformation and structure, but also in respect of microbiological action.

## Claims

1. Method for producing a hollow body formed by a pair of wafers (2, 2a), welded together along respective mating annular surfaces (4), by applying an aqueous moistening liquid to at least one of the mating surfaces of the wafers, previously subjected to baking, and by adhesion by mutual contact of said surfaces, **characterized in that** the moistening liquid is applied to said at least one surface in the form of droplets (G) by pulsed-jet deposition means, creating a relative motion between said jet deposition means and said at least one surface of said wafers so as to deposit separate and distinct droplets along the annular profile of said surface.

2. Method according to Claim 1, **characterized in that** said mating surfaces (4) have a smooth surface, obtained by baking a wafer batter in contact with the surface of baking half-moulds.

3. Method according to Claim 1, **characterized in that** said mating surfaces (4) have an open cell porous surface obtained by cutting a porous wall of wafer.

4. Method according to Claim 1, 2 or 3, **characterized in that** the jet deposition is carried out with an ejection pressure of the moistening liquid such as to cause only a superficial deposition of said liquid.

5. Method according to any one of Claims 1 to 4, **characterized in that** the moistening liquid is ejected through a nozzle having a size between 50 and 90 microns.

6. Method according to any of the preceding claims, **characterized in that** the moistening liquid is ejected under a pressure of less than 1 bar.

7. Method according to any of the preceding claims, **characterized in that** the total amount of moistening liquid deposited on the adhesion surface of one of said wafers is less than 2% by weight, and preferably less than 1% by weight relative to the weight of the wafer.

8. Method according to any of the preceding claims, **characterized in that** said wafers are obtained by baking a wafer batter including food fats, preferably in a quantity of less than 2.5% by weight relative to the weight of the batter.

9. Method according to any of the preceding claims, **characterized in that** the jet deposition is carried out through a jet injection head designed to generate pulsed jets of the moistening liquid with a volume of moistening liquid of less than 0.04 g for each pattern.

10. Method according to any of the preceding claims, **characterized in that** the moistening liquid is demineralized water.

11. Equipment for welding wafers by a method according to any one of Claims 1 to 10, comprising at least one jet injection head (8) for injection of the moistening liquid, at least one compartmented support (6, 6a) for housing said wafers (2, 2a), and motor means (34) adapted to create a relative motion between the injection head and the support along the annular profile of the surface of the mouth (4) of the wafers, thus enabling the moistening liquid to be deposited in droplets (G) along that profile.

12. Equipment according to Claim 11, **characterized in that** said injection head (8) comprises a casing (10), defining a chamber (12) for receiving moistening liquid and keeping it under pressure, and fitted with a nozzle (14) for the jet dispensing of the liquid, shutter means (16) movable between a closed position and an open position of the nozzle, and electromagnetic means (20) interacting with the shutter, which, when energized, are adapted to cause the translation of the shutter between the closed position and the open position of the nozzle, against the action of resilient means (32) tending to keep the shutter in the closed position.

13. Equipment according to Claim 11 or 12, **characterized in that** said nozzle has an opening with a size in the range from 50 to 90 microns.

14. Equipment according to any one of Claims 11 to 13, **characterized in that** said injection head is associated with means for keeping the moistening liquid under pressure, at a pressure of between 0.3 and 1 bar.

## Patentansprüche

1. Verfahren zum Herstellen eines hohlen Körpers, der durch ein Paar Waffeln (2, 2a) ausgebildet ist, die aneinander entlang entsprechender zusammenpassender, ringförmiger Oberflächen (4) geschweißt werden durch Anwenden einer wasserhaltigen, befeuchtenden Flüssigkeit an zumindest einer der zusammenpassenden Oberflächen der Waffeln, die vorher einem Backen ausgesetzt wurden, und durch Adhäsion durch gegenseitigen Kontakt der Oberflächen, **dadurch gekennzeichnet, dass** die befeuchtende Flüssigkeit an der zumindest einen Oberfläche in der Form von Tröpfchen (G) durch gepulste Jetablagerungsmittel durch Erzeugen einer Relativbewegung zwischen der Jetablagerungseinrichtung und der zumindest einen Oberfläche der Waffeln angewendet wird, um getrennte und einzelne Tröpfchen entlang des ringförmigen Profils der Oberfläche anzuordnen.

2. Verfahren nach Anspruch 1, **dadurch gekennzeichnet, dass** die zusammenpassenden Oberflächen (4) eine glatte Oberfläche aufweisen, die durch Backen eines in Kontakt mit der Oberfläche von Backhalbformen stehenden Waffelteiges erhalten werden.

3. Verfahren nach Anspruch 1, **dadurch gekennzeichnet, dass** die zusammenpassenden Oberflächen (4) eine poröse Oberfläche mit offenen Zellen aufweisen, die durch Schneiden einer porösen Wand der Waffel erhalten werden.

4. Verfahren nach Anspruch 1, 2 oder 3, **dadurch gekennzeichnet, dass** die Jetablagerung mit einem Ausstoßdruck der befeuchtenden Flüssigkeit ausgeführt wird, um nur eine oberflächliche Ablagerung der Flüssigkeit zu erwirken.

5. Verfahren nach einem der Ansprüche 1 bis 4, **dadurch gekennzeichnet, dass** die befeuchtende Flüssigkeit durch eine Düse mit einer Größe zwischen 50 und 90 µm ausgestoßen wird.

6. Verfahren nach einem der vorgehenden Ansprüche, **dadurch gekennzeichnet, dass** die befeuchtende Flüssigkeit mit einem Druck von weniger als 1 bar ausgestoßen wird.

7. Verfahren nach einem der vorgehenden Ansprüche, **dadurch gekennzeichnet, dass** der Gesamtmenge der befeuchtenden Flüssigkeit, die auf der Adhäsionsoberfläche von einer der Waffeln abgelagert wird, weniger als 2 Gewichts-% und bevorzugt weniger als 1 Gewichts-% relativ zu dem Gewicht der Waffel beträgt.

8. Verfahren nach einem der vorgehenden Ansprüche, **dadurch gekennzeichnet, dass** die Waffeln durch Backen eines Waffelteigs umfassend Speisefette, bevorzugt in einer Menge von weniger als 2,5 Gewichts-% relativ zu dem Gewicht des Teigs erhalten werden.

9. Verfahren nach einem der vorgehenden Ansprüche, **dadurch gekennzeichnet, dass** die Jetablagerung durch einen Jeteinspritzkopf durchgeführt wird, der ausgebildet ist, um gepulste Strahlen der befeuchtenden Flüssigkeit mit einem Volumen an befeuchtender Flüssigkeit von weniger als 0,04g für jedes Muster zu erzeugen.

10. Verfahren nach einem der vorgehenden Ansprüche, **dadurch gekennzeichnet, dass** die befeuchtende Flüssigkeit ein entmineralisiertes Wasser ist.

11. Anlage zum Schweißen von Waffeln mit einem Verfahren nach einem der Ansprüche 1 bis 10, umfassend zumindest einen Jeteinspritzkopf (8) zum Einspritzen der befeuchtenden Flüssigkeit, zumindest einen geteilten Träger (6, 6a) zum Aufnehmen der Waffeln (2, 2a) und eine Antriebseinrichtung (34), die ausgebildet ist, um eine Relativbewegung zwischen dem Einspritzkopf und dem Träger entlang des ringförmigen Profils der Oberfläche der Öffnung (4) der Waffeln zu erzeugen, wodurch es der befeuchtenden Flüssigkeit ermöglicht wird, in Tröpfchen (G) entlang des Profils angeordnet zu werden.

12. Anlage nach Anspruch 11, **dadurch gekennzeichnet, dass** der Einspritzkopf (8) aufweist ein Gehäuse (10), das eine Kammer (12) zum Aufnehmen von befeuchtender Flüssigkeit festlegt und diese unter Druck hält, und mit einer Düse (14) für das Ausstoßen der Flüssigkeit versehen ist, eine Verschlusseinrichtung (16), die zwischen einer geschlossenen Position und einer offenen Position der Düse beweglich ist, und eine elektromagnetische Einrichtung (20) die mit dem Verschluss interagiert, welche, wenn mit Energie beaufschlagt, ausgebildet ist, um die Verschiebung des Verschlusses zwischen der geschlossenen Position und der geöffneten Position der Düse entgegen der Wirkung einer Widerstandseinrichtung (32), die dazu neigt den Verschluss in der geschlossenen Position zu halten, zu erwirken.

13. Anlage nach Anspruch 11 oder 12, **dadurch gekennzeichnet, dass** die Düse eine Öffnung mit einer Größe im Bereich von 50 bis 90 µm aufweist.

14. Anlage nach einem der Ansprüche 11 bis 13, **dadurch gekennzeichnet, dass** der Einspritzkopf mit einer Einrichtung zum Halten der befeuchtenden Flüssigkeit unter Druck bei einem Druck zwischen 0,3 und 1 bar versehen ist.

## Revendications

1. Procédé de production d'un corps creux formé par une paire de gaufrettes (2, 2a) soudées ensemble le long de surfaces annulaires conjuguées respectives (4) en appliquant un liquide d'humification aqueux à au moins l'une des surfaces conjuguées des gaufrettes, soumises précédemment à la cuisson, et par adhésion par contact mutuel desdites surfaces, **caractérisé en ce que** le liquide d'humidification est appliqué à ladite au moins une surface sous la forme de gouttelettes (G) par des moyens de dépôt par jet pulsé, créant un mouvement relatif entre lesdits moyens de dépôt par jet et ladite au moins une surface desdites gaufrettes de sorte à déposer des gouttelettes séparées et distinctes le long du profil annulaire de ladite surface.

2. Procédé selon la revendication 1, **caractérisé en ce que** lesdites surfaces conjuguées (4) ont une surface lisse, obtenue par la cuisson d'une pâte à gaufrette en contact avec la surface de demi-moules de cuisson.

3. Procédé selon la revendication 1, **caractérisé en ce que** lesdites surfaces conjuguées (4) ont une surface poreuse à cellules ouvertes obtenue par découpe d'une paroi poreuse de gaufrette.

4. Procédé selon la revendication 1, 2 ou 3, **caractérisé en ce que** le dépôt par jet est réalisé avec une pression d'éjection du liquide d'humidification de sorte à causer seulement un dépôt superficiel dudit liquide.

5. Procédé selon l'une quelconque des revendications 1 à 4, **caractérisé en ce que** le liquide d'humidification est éjecté par une buse présentant une taille entre 50 et 90 microns.

6. Procédé selon l'une quelconque des revendications précédentes, **caractérisé en ce que** le liquide d'humidification est éjecté sous une pression inférieure à 1 bar.

7. Procédé selon l'une quelconque des revendications précédentes, **caractérisé en ce que** la quantité totale de liquide d'humidification déposé sur la surface d'adhésion d'une desdites gaufrettes est inférieure à 2 % en poids, et de préférence inférieure à 1 % en poids par rapport au poids de la gaufrette.

8. Procédé selon l'une quelconque des revendications précédentes, **caractérisé en ce que** lesdites gaufrettes sont obtenues par cuisson d'une pâte à gaufrette comportant des graisses alimentaires, de préférence dans une quantité inférieure à 2,5 % en poids par rapport au poids de la pâte.

9. Procédé selon l'une quelconque des revendications précédentes, **caractérisé en ce que** le dépôt par jet est réalisé par une tête d'injection à jet conçue pour générer des jets pulsés de liquide d'humidification avec un volume de liquide d'humidification inférieur à 0,04 g pour chaque motif.

10. Procédé selon l'une quelconque des revendications précédentes, **caractérisé en ce que** le liquide d'humidification est de l'eau déminéralisée.

11. Equipement pour le soudage de gaufrettes par un procédé selon l'une quelconque des revendications 1 à 10, comprenant au moins une tête d'injection à jet (8) pour l'injection du liquide d'humidification, au moins un support compartimenté (6, 6a) pour loger lesdites gaufrettes (2, 2a) et des moyens motorisés (34) adaptés pour créer un mouvement relatif entre la tête d'injection et le support le long du profil annulaire de la surface de la bouche (4) des gaufrettes, permettant ainsi au liquide d'humidification d'être déposé en gouttelettes (G) le long de ce profil.

12. Equipement selon la revendication 11, **caractérisé en ce que** ladite tête d'injection (8) comprend un boîtier (10), définissant une chambre (12) pour recevoir du liquide d'humidification et le maintenir sous pression, et doté d'une buse (14) pour la distribution par jet du liquide, des moyens obturateurs (16) mobiles entre une position fermée et une position ouverte de la buse, et des moyens électromagnétiques (20) intergissant avec l'obturateur, qui sont adaptés lorsqu'ils sont alimentés pour entraîner la translation de l'obturateur entre la position fermée et la position ouverte de la buse, contre l'action des moyens élastiques (32) tendant à maintenir l'obturateur dans la position fermée.

13. Equipement selon la revendication 11 ou 12, **caractérisé en ce que** ladite buse a une ouverture, dont la taille est dans la plage de 50 à 90 microns.

14. Equipement selon l'une quelconque des revendications 11 à 13, **caractérisé en ce que** ladite tête d'injection est associée aux moyens pour maintenir le liquide d'humidification sous pression, à une pression entre 0,3 et 1 bar.
